**Europäisches Patentamt**

**European Patent Office**

**Office européen des brevets**

(19)

(11) Veröffentlichungsnummer: **0 179 044 B1**

# (12) EUROPÄISCHE PATENTSCHRIFT

(45) Veröffentlichungstag der Patentschrift:
25.07.90

(51) Int. Cl.⁵: **B21D 51/08**, B60K 15/03

(21) Anmeldenummer: 85890217.4

(22) Anmeldetag: 09.09.85

(54) **Verfahren zur Herstellung von Kugeln aus Streckmetall.**

(30) Priorität: 20.09.84 AT 2990/84

(43) Veröffentlichungstag der Anmeldung:
23.04.86 Patentblatt 86/17

(45) Bekanntmachung des Hinweises auf die Patenterteilung:
25.07.90 Patentblatt 90/30

(84) Benannte Vertragsstaaten:
BE CH DE FR GB IT LI LU NL SE

(56) Entgegenhaltungen:
DE-A- 2 151 403
FR-A- 2 390 223
US-A- 1 526 140
US-A- 3 349 953
US-A- 3 356 256
US-A- 3 470 720
US-A- 3 784 050
US-A- 3 822 807

(73) Patentinhaber: OFLUOGLU Azmi, Dr., Vatan Cad.No: 19,
Aksaray - Istanbul(TR)

(72) Erfinder: Schrenk, Hannes, Schneeberggasse 10,
A-2700 Wiener Neustadt(AT)

(74) Vertreter: Müllner, Erwin, Dr. et al, Patentanwälte Dr.
Erwin Müllner Dipl.-Ing. Werner Katschinka
Postfach 159 Weihburggasse 9, A-1010 Wien(AT)

## Beschreibung

Die Erfindung bezieht sich auf ein Verfahren zur Herstellung von Kugeln aus Streckmetall zum Ausfüllen von Behältern für brennbare Flüssigkeiten oder Gase, insbesondere Benzin, zwecks Verhinderung explosionsartiger Verbrennungsvorgänge.

Um explosionsartige Verbrennungen in mit brennbaren Flüssigkeiten oder Gasen gefüllten Behältern zu verhindern, können die Behälter bei ihrer Herstellung mit Streckmetall aus dünnen Aluminiumfolien ausgefüllt werden. Nachteilig hierbei ist, daß die Behälter mit einem Block aus Streckmetall ausgefüllt sind, dessen Ausmaße den inneren Abmessungen des Behälters entsprechen und der demgemäß nicht oder nur schwierig unter Zerstörung des Blockkes aus dem Behälter entfernt werden kann. Eine Entfernung der Füllung aus Streckmetall aus dem Behälter kann z.B. wegen einer gewünschten Reinigung des Behälters notwendig sein.

Um einen Behälter nachträglich mit explosionsschützendem Streckmetall ausfüllen zu können, wird in der GB-A 2 028 129 vorgeschlagen, Quadrate, Rechtecke, Zylinder oder Kugeln aus Streckmetall durch die Behälteröffnung in das Behälterinnere zu schieben. Es ist klar, daß sich bei einem nachträglichen Füllen nicht kontrollieren läßt, ob der Behälter tatsächlich vollständig mit Streckmetall ausgefüllt ist. Um die heikle Aufgabe eines Explosionsschutzes aber erfüllen zu können, ist es lebenswichtig, daß keine Hohlräume im Tankinneren verbleiben. Gerade Benzintanks bei Kraftfahrzeugen weichen aus Gründen maximaler Aufnahmefähigkeit von den einfachen Grundformen, wie Zylinderform, Kugelform oder Quaderform, oftmals ab. Die bekannten Füllkörper neigen infolge ihres unzulänglichen Herstellungsverfahrens zum gegenseitigen Verklemmen durch Verhaken der hochgebogenen Lückenränder des Streckmetalls. Es bilden sich feste Brücken im Inneren der Tanks, welche Hohlräume ermöglichen. Damit sind solcherart ausgefüllte Behälter nicht mehr explosionssicher.

Die Erfindung zielt darauf ab, ein Verfahren der eingangs beschriebenen Art anzugeben, welches die Herstellung von Kugeln aus Streckmetallbahnen auch besonders geringer Folienstärke ermöglicht, die die genannten Nachteile nicht aufweisen. Dies wird dadurch erreicht, daß eine Bahn aus Streckmetall, insbesondere Streckaluminium mit einer Dicke von 60–80 µm, in Längsrichtung unter Formung eines schlauchartigen Gebildes zusammengerollt und der so erhaltene Schlauch aus Streckmetall in hohlzylindrische Stücke zerschnitten wird, wonach aus den hohlzylindrischen Stücken Kugeln durch Stauchen geformt werden.

Das Verfahren läßt die Herstellung von Kugeln zu, deren Oberfläche durch Stauchen verdichtet und geglättet ist.

Es sind die bei Streckmetall hochstehenden Lückenränder an der Oberfläche durch das Stauchen der zylindrischen Stücke derart umgebogen, daß sich eine wesentlich glattere Oberfläche als jene des unverformten Streckmetalls ergibt. Damit rollen die Kugeln wesentlich besser als die bisher bekannten rauhen Kugeln aufeinander ab und füllen einen Behälter mit größter Zuverlässigkeit bis in den äußersten Bereich aus. Eine Brückenbildung durch gegenseitiges Verhaken der Kugeln tritt nicht ein. Dennoch bleiben Öffnungen an der Oberfläche der Kugeln bestehen, durch welche die explosionsgefährdete Flüssigkeit eindringen kann. Es hat sich gezeigt, daß die besonderen Kugeln hergestellt gemäß der Erfindung sowohl hinsichtlich der explosionsverhindernden Wirkung als auch bezüglich der gewünschten minimalen Verringerung des Füllvolumens der damit zur Gänze ausgefüllten Behälter im wesentlichen dem Füllmaterial aus Streckmetall in Blockform gleichwertig sind. Die gemäß dem Verfahren hergestellten Kugeln weisen auch die erforderliche Formstabilität auf, so daß bei damit ausgefüllten Benzintanks auch nach längerer Verwendungsdauer kein Setzen der Kugeln eintritt und der Tank vollständig mit Kugeln ausgefüllt bleibt.

Bei einem Ausführungsbeispiel wird eine Bahn aus Streckmetall mit einer Breite von etwa 15 cm eingesetzt und daraus ein Schlauch mit einem Durchmesser von etwa 2 cm gebildet, der in Stücke mit einer Länge von 5 bis 6 cm zerschnitten wird.

Die Vorrichtung zur Herstellung der Kugeln besteht im wesentlichen aus einer trichterförmigen Hülse, beispielsweise einer Kalibrierdüse, einer Schneideinrichtung und einer Staucheinrichtung mit einem in einem Zylinder mit konkav ausgebildeter Amboßfläche bewegbaren Stempel mit konkav ausgebildeter Stirnfläche. Das bahnförmige Steckmetall wird bei Verwendung einer Kalibrierdüse dieser Düse zugeführt und in dieser zu einem schlauchförmigen Gebilde zusammengerollt. Der aus der Kalibrierdüse austretende Schlauchstrang wird zur Schneideinrichtung gefördert, wo er in hohlzylindrische Stücke zerschnitten wird. Diese Stücke werden in die Staucheinrichtung geleitet, wo sie zwischen den konkav ausgebildeten Stirnflächen von Stempel und Amboß gestaucht werden, so daß sich Kugeln bilden.

## Patentansprüche

Verfahren zur Herstellung von Kugeln aus Streckmetall zum Ausfüllen von Behältern für brennbare Flüssigkeiten oder Gase, insbesondere Benzin, zwecks Verhinderung explosionsartiger Verbrennungsvorgänge, dadurch gekennzeichnet, daß eine Bahn aus Streckmetall, insbesondere Streckaluminium mit einer Dicke von 60–80 µm, in Längsrichtung unter Formung eines schlauchartigen Gebildes zusammengerollt und der erhaltene Schlauch aus Streckmetall in hohlzylindrische Stücke zerschnitten wird, wonach aus den hohlzylindrischen Stücken Kugeln durch Stauchen geformt werden.

## Claims

A method of forming balls from expanded metal to fill in receptacles containing flammable liquids or gases, in particular petrol, so as to prevent explosive combustion processes, characterized in that a band of said expanded metal, in particular expanded aluminium of 60–80 µm, is rolled up in longitudinal direction forming a tube, said expanded metal tube is cut into hollow cylindrical pieces, said hollow cylindrical pieces subsequently being upset so as to form balls.

## Revendications

Procédé pour la fabrication de billes en métal déployé pour le remplissage de réservoirs pour liquides ou gaz inflammables, en particulier l'essence, en vue de prévenir des processus de combustion sous forme d'explosion, caractérisé par le fait qu'une bande de métal déployé, en particulier d'aluminium déployé, d'une épaisseur de 60–80 µm, est enroulée en sens longitudinal en formant une sorte de tuyau, et que le tuyau en métal déployé ainsi obtenu est découpé en pièces cylindriques creuses, les billes étant formées par refoulement à partir des pièces cylindriques creuses.